# EUROPEAN PATENT APPLICATION

(11) **EP 1 467 281 A2**
(43) Date of publication of application: **13.10.2004**
(21) Application number: 04007184.7
(22) Date of filing: 25.03.2004
(51) Int. Cl.: G06F 9/38

(54) **Data transmission/reception apparatus**

(30) Priority: 08.04.2003 JP 2003104531
(71) Applicant: MATSUSHITA ELECTRIC INDUSTRIAL CO., LTD., Kadoma-shi, Osaka 571-8501 (JP)
(72) Inventor: Ono, Tadashi, Osaka-shi Osaka-fu 540-0012 (JP); Miyazaki, Akihiro, Osaka-fu 591-8032 Japan (JP); Maeda, Shigenori, Osaka-fu 576-0021 (JP); Vogler, Joerg, 65239 Hochheim (DE); Pfeiffer, Gerald, 63741 Aschaffenburg (DE)
(74) Representative: Gassner, Wolfgang, Dr.

(57) **Abstract**

In a data transmission/reception apparatus (11), a data transfer is performed by a pipeline technique between N processing sections (Pd_1 to Pd_N). The data transmission/reception apparatus (11) includes (N-1) or more intermediary sections (21), each having a transmission/reception control section (23) for controlling data transmission/reception and a buffer (27). The intermediary sections (21) interconnect adjoining first and second data processing sections (Pd_1 and Pd_2) to allow data obtained through the data process performed by the first data processing section (Pd_1) to be transmitted to the second data processing section. A transmission API (35a) in the first data processing section (Pd_1) transmits data to the second data processing section (Pd_2). AreceptionAPI (37b) in the second data processing section (Pd_2) receives the data transmitted from the second data processing section (Pd_2).

## Description

### BACKGROUND OF THE INVENTION

### Field of the Invention

The present invention relates to a technique of performing data conversion for multimedia data, and more particularly to a technique of performing data conversion by a pipeline technique.

### Description of the Background Art

When storing or transmitting multimedia data, e.g., video or audio, data format conversions are to be generally performed. Examples of data format conversions include various processes such as compression, multiplexing, and encoding. There is a technique, known as a pipeline technique, which divides such data format conversions into components on a process-by-process basis, and processes the components in a successive manner. According to the pipeline technique, any component which is located at an end of a data transmission/reception path includes either a transmission control section or a reception control section for enabling data transmission or reception, respectively, with other components. Any component "in the middle", i.e. , those which are not located at the ends of such a data transmission/reception path, needs to include both a transmission control section and a reception control section.

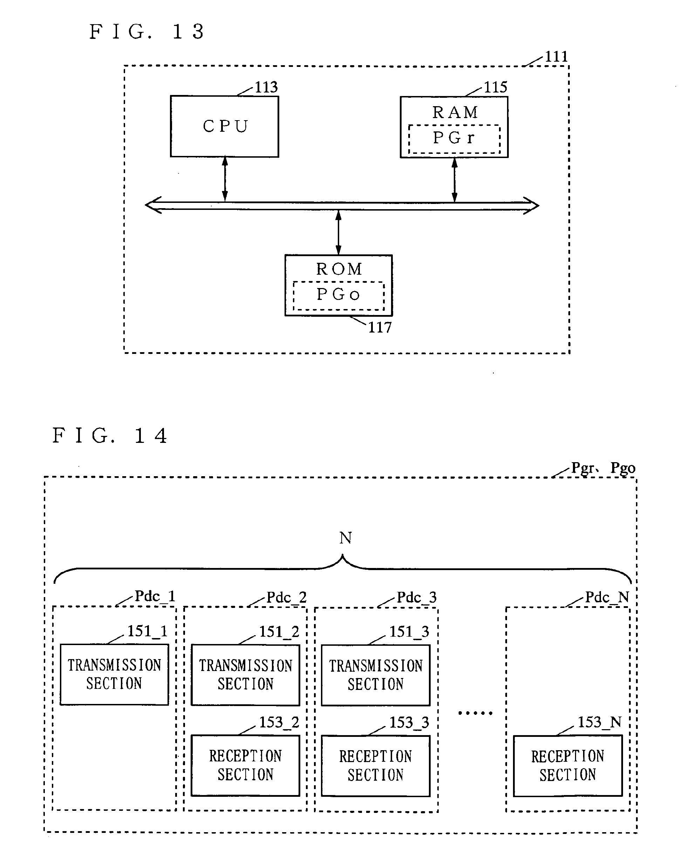

FIG. 13 illustrates a hardware structure of a conventional data transmission/reception apparatus 111, which realizes a format conversion function for multimedia data by means of software. The data transmission/reception apparatus 111 includes a CPU 113, a ROM 117, and a RAM 115. The ROM 117 stores a program which realizes various functions, including the multimedia data format conversion function. From the ROM 117, the CPU 113 reads a program for implementing the multimedia data conversion function. The program for implementing the multimedia data conversion function which has thus been read is loaded to the RAM 115 by the CPU 113, thus realizing a data transmission/reception apparatus by software means.

For conciseness, the program for implementing multimedia data conversion function as stored in the ROM 117 will hereinafter be referred to as the "implementing program PGo", whereas the multimedia data conversion function as loaded to the RAM 115 will be referred to as the "loaded program PGr".

FIG. 14 schematically shows the implementing program PGo stored in the ROM 117. The implementing program PGo includes a number N of data processing sections Pdc_1 to Pdc_N respectively corresponding to the aforementioned split components, where N is an arbitrary natural number. The N data processing sections Pdc_1 to Pdc_N may collectively be referred to as "data processing sections Pdc".

Each data processing section Pdc basically includes a transmission section 151 and a reception section 153, except that the data processing sections Pdc_1 and Pdc_N, which are located at either end of the path, only include a transmission section 151_1 and a reception section 153_N, respectively. In otherwords , the implementing program PGo includes (N-1) transmission sections 151_1 to 151_(N-1) and (N-1) reception sections 153_2 to 153_N. In this aspect, the implementing program PGo may practically be seen as containing (N-1) data processing sections Pdc (rather than N data processing sections Pdc). Herein, the description of the loaded program PGr is omitted because it is merely a loaded version, in the RAM 115, of the implementing program PGo shown in FIG. 13.

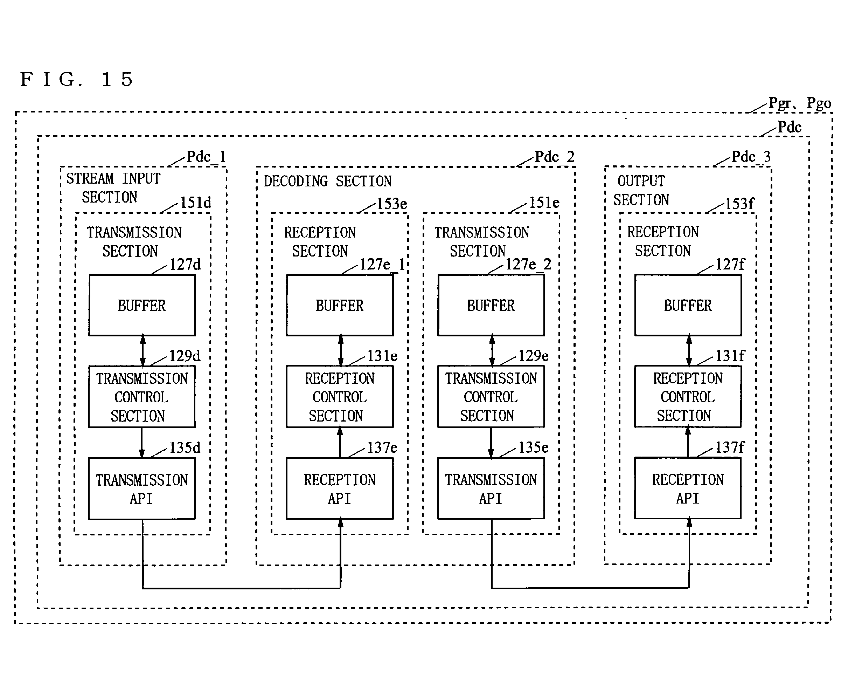

Referring to FIG. 15, the implementing program PGo stored in the ROM 117 and the loaded program PGr on the RAM 115 will be specifically described. For conciseness, the exemplary implementing program PGo in FIG. 15 is shown to include only a first data processing section Pdc_1, a second data processing section Pdc_2 , and a third data processing section Pdc_3 . In this case, the first data processing section Pdc_1 and the third data processing section Pdc_3, which are located at either end of the path, only include a transmission section 151d and a reception section 153f, respectively. On the other hand, the second data processing section Pdc_2 includes both a reception section 153e and a transmission section 151e. In other words, the exemplary implementing program PGo in FIG. 15 includes two transmission sections 151d and 151e and two reception sections 153e and 153f. In this aspect, the exemplary implementing program PGo in FIG. 15 may practically be seen as containing two data processing sections Pdc.

In this example, the first data processing section Pdc_1 serves as a stream input section for receiving an incoming data stream which is supplied from an external data source. The second data processing section Pdc_2 serves as a decoding section for decoding the data stream which has been supplied via the first data processing section Pdc_1 (stream input section) and outputting the decoding result. The third data processing section Pdc_3 serves as an output section for outputting the decoding result from the second data processing section Pdc_2 (decoding section) in a format which is adapted to an external output device. Since the stream inputting process, decoding process, and outputting process can be realized by known means andmethods, the descriptions thereof are omitted. Instead, its data transmission/reception function will be mainly described.

Hereinafter, a data conversion process to be performed in the case where an audio stream is input will be described. Upon obtaining an audio stream from a medium (not shown), the first data processing section Pdc_1 transmits an audio stream to the reception section 153e of the second data processing section Pdc_2 , via the transmission section 151d. Upon receiving the audio stream from the first data processing section Pdc_1, the second data processing section Pdc_2 decodes the audio stream to generate audio data in a commonly-used form (hereinafter referred to as actual audio data). Thereafter, the actual audio data is transmitted to the reception section 153f of the third data processing section Pdc_3 via the transmission section 151e. Upon receiving the actual audio data from the second data processing section Pdc_2, the third data processing section Pdc_3 outputs the received actual audio data as sounds.

The transmission section 151d includes a buffer 127d, a transmission control section 129d, and a transmission API 135d. Similarly, the transmission section 151e includes a buffer 127e_1, a transmission control section 129d, and a transmission API 135d.

The reception section 153e includes a buffer 127e_1 and a reception API 137e. Similarly, the reception section 153f includes a buffer 127f and a reception API 137f.

The buffer 127 does not need to be provided in every transmission section 151 and every reception section 153. It suffices if either a data-sending transmission section 151 or a data-receiving reception section 153 includes a buffer 127. For example, if the transmission section 151 of the second data processing section Pdc_2 includes a buffer 127, then the reception section 153 of the third data processing section Pdc_3, which is to receive data from the second data processing section Pdc_2, does not need to include a buffer 127.

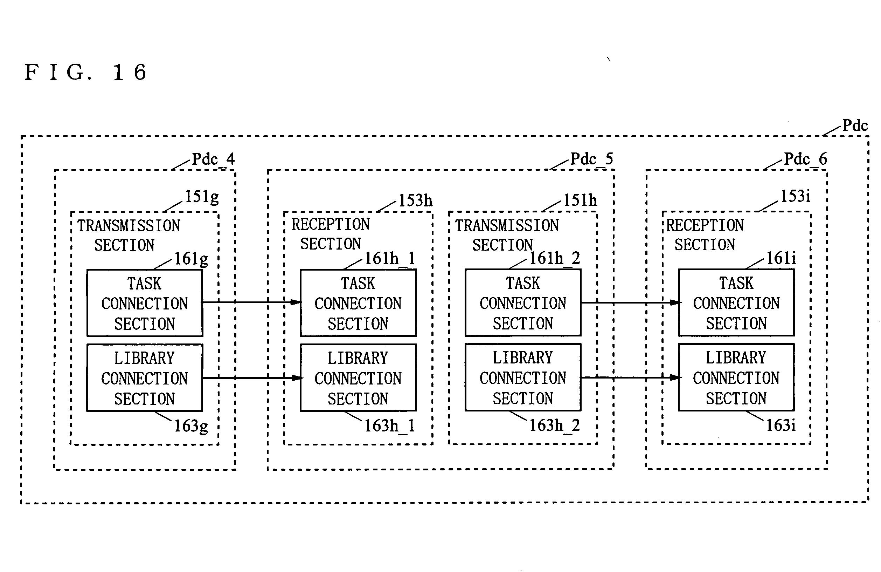

Referring to FIG. 16, an implementing program PGo for performing data transmission/reception so as to support both synchronous and asynchronous operations, as well as a corresponding loaded program PGr on the RAM 115 will be described in more detail. Note that, in general, data transmission/reception in a pipeline process may be performed either synchronously or asynchronously.

In order to perform synchronous data transmission/reception, each transmission section 151 and each reception section 153 further need a task connection section 161. In order to perform asynchronous data transmission/reception, each transmission section 151 and each reception section 153 further need a library connection section 163. Therefore, in order to support both synchronous data transmission/reception and asynchronous data transmission/reception, each transmission section 151 and each reception section 153 need to include both a task connection section 161 and a library connection section 163. For conciseness, the buffers 127, transmission control sections 129, and transmission APIs 135 shown in FIG. 15 are omitted in the illustration of FIG. 16.

In the present example, the first data processing section Pdc_1, the second data processing section Pdc_2, and the third data processing section Pdc_3 shown in FIG. 15 are replaced by, respectively, a fourth data processing section Pdc_4 , a fifth data processing section Pdc_5, and a sixth data processing section Pdc_6.

The transmission section 151g of the fourth data processing section Pdc_4 basically includes a task connection section 161g and a library connection section 163g in addition to the structure of the transmission section 151d of the first data processing section Pdc_1. Similarly, the reception section 153h of the fifth data processing section Pdc_5 includes a task connection section 161h_1 and a library connection section 163h_1 in addition to the structure of the reception section 153e of the second data processing section Pdc_2, while the transmission section 151h of the fifth data processing section Pdc_5 includes a task connection section 161h_2 and a library connection section 163h_2 in addition to the structure of the transmission section 151e of the second data processing section Pdc_2. The reception section 153i of the sixth data processing section Pdc_6 includes a task connection section 161i and a library connection section 163i in addition to the structure of the reception section 153f of the third data processing section Pdc_3.

In general, the stream acquisition by the fourth data processing section Pdc_4 and the stream decoding by the fifth data processing section Pdc_5 are performed synchronously in order to reduce the number of tasks involved. Alternatively, these processes may be performed asynchronously in separate tasks. In the case where these processes are performed synchronously, the fifth data processing section Pdc_5 serves as a so-called active data processing section which is capable of activating a task on its own, while the fourth data processing section Pdc_4 serves as a so-called passive data processing section which operates in synchronization with the task processed by the fifth data processing section Pdc_5.

On the other hand, the stream decoding by the fifth data processing section Pdc_5 and the data read by the sixth data processing section Pdc_6 are generally performed asynchronously. The actual audio data which is output from the sixth data processing section Pdc_6 must be output at equal intervals, in accordance with interruptions by means of a timer (not shown). However, decoding by the fifth data processing section Pdc_5 may suffer from jitter or delay in its processing timing. In order to absorb such jitter, in general, a data queue is provided in between the fifth data processing section Pdc_5 and the sixth data processing section Pdc_6, in order to perform the data write from the fifth data processing section Pdc_5 and the data read by the sixth data processing section Pdc_6 asynchronously.

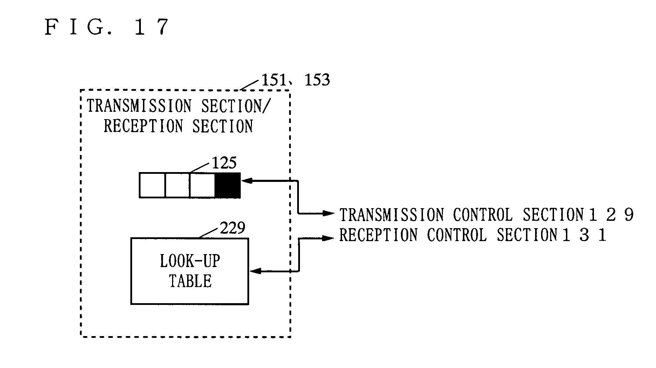

Referring to FIG. 17, a method of performing data write and data read in an asynchronous manner by utilizing a data queue will be described. In this example, a data queue 125 and a look-up table 229 are provided in either one of the transmission section 151h of the fifth data processing section Pdc_5 or the reception section 153i of the sixth data processing section Pdc_6. In the look-up table 229, buffer information concerning the data queue 125 is recorded. In the case of performing asynchronous processes, the fifth data processing section Pdc_5 and the sixth data processing section Pdc_6 are both active data processing sections, i.e., capable of activating a task on their own.

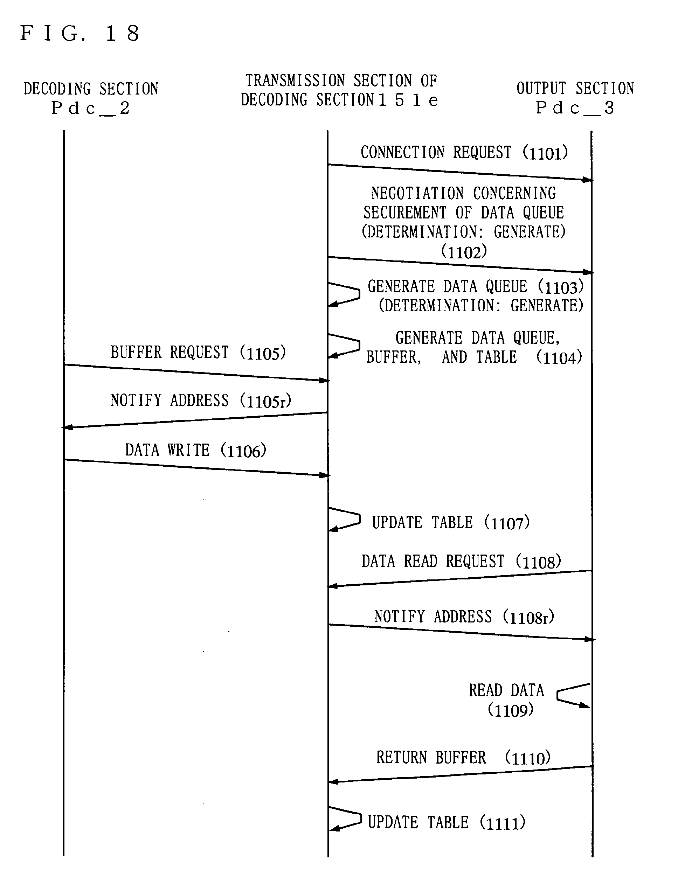

Referring to FIG. 18, the data transmission/reception operation to occur between the second data processing section Pdc_2 (decoding section) and the third data processing section Pdc_3 (output section) will be described. In order to perform a data transmission between the second data processing section Pdc_2 and the third data processing section Pdc_3, it is necessary to make a connection request from the transmission section of one of the data processing sections Pdc_2 and Pdc_3, or from the reception section of the other data processing section Pdc_3 or Pdc_2. It is assumed herein that a connection request is made from the transmission section 151e to the reception section 153f (step 1101).

Next, a negotiation is performed as to which one of the data processing sections Pdc_2 and Pdc_3 is to secure or provide the data queue 125 to be used for the data transmission between the two data processing sections Pdc_2 andPdc_3 (step 1102). Based on the result of the negotiation, a determination as to generation of the data queue 125 is made (step 1103). It is assumed herein that the transmission section 151e is supposed to secure the data queue 125. In accordance with the result of the above determination, the transmission section 151e secures the data queue 125 and generates the look-up table 229 (step 1104). In order to transmit the actual audio data which has been obtained through decoding, the second data processing section Pdc_2 requests the transmission section 151e for a buffer (step 1105). In response, the transmission section 151e checks the look-up table 229 for a vacant buffer, and notifies to the second data processing section Pdc_2 the address of any vacant buffer found (step 1105r).

The second data processing section Pdc_2 writes the data to be transmitted (i.e., actual audio data in this example) to the notified address ( step 1106 ) . When the datawrite is completed, the transmission section 151e updates the look-up table 229 (step 1107).

When the third data processing section Pdc_3 is to receive data, the reception section 153f makes a data read request to the transmission section 151e (step 1108). In response, the transmission section 151e checks the look-up table 229 for a buffer which is to output data next, i.e. , a buffer storing data having the oldest time stamp in all the data in the data queue 125, and notifies the address of such a buffer to the reception section 153f (step 1108r). The reception section 153f reads the data to be received from this address(step 1109), and outputs the data, whereby sounds are reproduced. Once the data read is completed, the reception section 153f returns the buffer to the transmission section 151e(step 1110). In response, the transmission section 151e updates the look-up table 229 so that the returned buffer now appears as a vacant buffer (step 1111).

In the loaded program PGr (implementing program PGo) shown in FIG. 15, the reading of a stream from the medium 901a and the decoding of the stream may be performed asynchronously in separate tasks, or synchronously in the same task. Usually, an increase in the number of tasks calls for more resource for operation; therefore, synchronous operations are the usual choice unless there is a special reason to perform asynchronous operations. In this example, the second data processing section Pdc_2 serves as an active data processing section capable of activating a task on its own, while the first data processing section Pdc_1 (stream input section) serves as a passive data processing section which operates in synchronization with the task processed by the second data processing section Pdc_2. In this case, no data queue for temporary data storage is needed between the data processing sections Pdc_1 and Pdc_2.

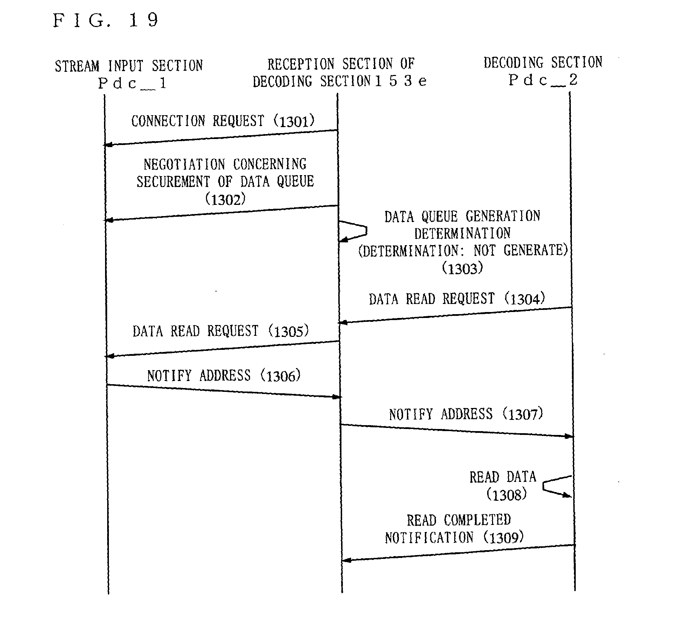

Referring to FIG. 19, the data transmission/reception operation to occur between the first data processing section Pdc_1 (stream input section) and the second data processing section Pdc_2 (decoding section) will be described.

The reception section 153e makes a connection request to the transmission section 151d (step 1301). Then, the reception section 153e performs a negotiation concerning securement of the data queue 125 to be used for the data transmission between the data processing sections Pdc_1 and Pdc_2 (step 1302). Based on the result of the negotiation, it is determined whether a data queue 125 is to be generated (step 1303). In this case, it is determined that a data queue 125 is not to be generated because the data processing sections Pdc_1 and Pdc_2 operate in synchronization with each other.

A data read request is to be made by the active data processing section. Therefore, the second data processing section Pdc_2 makes the data read request (step 1304). Because the data processing sections Pdc_1 and Pdc_2 operate in synchronization, the reception section 153e directly transmits the received data read request to the transmission section 151d (step 1305).

Upon receiving the data read request, the transmission section 151d notifies to the reception section 151e an address of the data to be next transmitted (step 1306). The reception section 151e notifies the data address to the second data processing section Pdc_2 (step 1307). After performing a data read from the notified address (step 1308), the second data processing section Pdc_2 sends a read completed notification to the reception section 153e (step 1309).

A related technique is disclosed in Japanese Patent Laid-Open Publication No. 10-283199. This publication discloses a method which realizes a series of data conversion processes for a pipeline technique by means of software, for example, on a computer. According to this technique, single data processes such as an input process, a demultiplexing process, and a decompression process are divided into components, out of which necessary components are combined to perform a desired format conversion, such that conversion processes can be consecutively performed by the pipeline technique.

Pipeline data processing can be realized as the component data processing sections Pdc perform consecutive processes. However, in order to be able to perform a data transmission/reception with other components, each data processing section Pdc needs to include a transmission control section and a reception control section, except that each data processing section Pdc which is located at an end of the data transmission/reception path only needs to include either a transmission control section or a reception control section.

Therefore, in the case where the data transmission/reception apparatus 111 includes N data processing sections Pdc, (N-1) pairs of transmission sections 151 and reception sections 153 are required (because each data processing section Pdc which is located at an end of the pipeline path only needs to include a transmission section 151 or a reception section 153) . Thus, the number of transmission sections 151 and reception sections 153 increases according to the number of data processing sections Pdc in the pipeline. This results in an increase in the implementation size and cost of the transmission sections 151 and the reception sections 153 in the data processing sections Pdc.

Note that, in the case where the functions of the data processing sections Pdc are to be implemented by hardware means, the implementations are in the form of devices (e.g., arrays). When the data processing sections Pdc are realized by hardware means, the number of devices will increase as the number of data processing sections Pdc increases, also inviting an increase in the implementation size and cost.

On the other hand, in the case where the functions of the data processing sections Pdc are to be implemented by software means, the implementations are in the form of programs in the ROM 117. When the dataprocessing sections Pdc are realized by software means, a large-capacity ROM 117 for storing an implementing program will be required. This could be a fatal disadvantage in devices with limited resource (such as the size of the ROM 117), e.g., mobile devices.

In some cases, as mentioned above, two types of data processing sections Pdc may need to be supported, i.e., active data processing sections which are capable of activating a task on their own, and passive data processing sections which operate in synchronization with tasks processed by the active data processing sections. In such cases, two types of transmission/reception functions must be implemented, thus resulting in twice as much implementation cost and twice as many test steps required as in the case where only one type of transmission/reception function needs to be implemented.

Moreover, when a new data processing section Pdc is to be added, the operation of the apparatus must be verified with respect to the connection between the new data processing section Pdc and every one of the existing data processing sections Pdc. As the number of existing data processing sections Pdc increases, the number of required test steps is increased.

Furthermore, as has been described with reference to FIG. 19, the following functions need to be implemented in a conventional data transmission/reception apparatus 111: negotiation concerning securement of a data queue, data queue generation determination (connection with an active data processing section), data queuing, generation of a buffer management database, buffer requesting operation, data write, update of the buffer management database, read request operation, buffer returning (connection with a passive data processing section) , read request operation, address notification operation, and read completed notification operation. Moreover, for each of these functions, it is necessary to verify whether a proper connection exists between an active data processing section and a passive data processing section. Furthermore, in the conventional data processing apparatus, as many test steps for verifying connections will be required as there are components.

### SUMMARY OF THE INVENTION

Therefore, an object of the present invention is to provide a data transmission/reception apparatus having a reduced redundancy associated with a plurality of data processes, such that the development cost and the number of required test steps can be reduced. The present invention is directed to a data transmission/reception apparatus for performing a data transfer by a pipeline technique between a first predetermined number of processing means each capable of performing a data process, the first predetermined number being two or more, comprising: a second predetermined number of intermediary means for interconnecting first data processing means and second data processing means and allowing data obtained through the data process performed by the first data processing means to be transmitted to the second data processing section, wherein the first data processing means and second data processing means are adjoining data processing means, the second predetermined number being smaller by one than the first predetermined number, wherein, the first data processing means includes transmission means for providing connection to the intermediary means to transmit the data to the second data processing means, the second data processing means includes reception means for providing connection to the intermediary means to receive the data transmitted from the first data processing means, and the intermediary means includes: transmission/reception control means for controlling the data transmission/reception; and a buffer for temporarily storing the data.

Thus, according to the present invention, when performing a data transfer by a pipeline technique, a reception function and a transmission function are integrally handled by an intermediary means, thereby reducing redundancy residing in a plurality of data processes. Moreover, it is possible to reduce the program size required for controlling data processes, product development cost, and the number of test steps to be performed.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the structure of a data transmission/reception apparatus according to the present invention;
FIG. 2 is a block diagram illustrating the software structure of a ROM 17 of a data transmission/reception apparatus 11 according to the present invention;
FIG. 3 is a block diagram illustrating the software structure of a RAM of a data transmission/reception apparatus 11 according to a first embodiment of the present invention;
FIG. 4 is a diagram illustrating an internal structure of an intermediary section 21;
FIG. 5 is a flowchart illustrating an operation of the data transmission/reception apparatus 11 according to the first embodiment;
FIG. 6 is a sequence chart illustrating an operation of the data transmission/reception apparatus 11 according to the first embodiment;
FIG. 7 is a block diagram illustrating the software structure of a RAM of a data transmission/reception apparatus 11 according to a second embodiment of the present invention;
FIG. 8 is a flowchart illustrating an operation of a data transmission/reception apparatus 11 according to a second embodiment of the present invention;
FIG. 9 is a sequence chart illustrating an operation of the data transmission/reception apparatus 11 according to the second embodiment;
FIG. 10 is a flowchart illustrating an operation of the data transmission/reception apparatus 11 according to the second embodiment of the present invention;
FIG. 11 is a sequence chart illustrating an operation of the data transmission/reception apparatus 11 according to the second embodiment;
FIG. 12 is a block diagram illustrating an example of multimedia data conversion by a pipeline technique;
FIG. 13 is a block diagram illustrating the structure of a conventional data transmission/reception apparatus;
FIG. 14 is a block diagram illustrating the software structure of a conventional data transmission/reception apparatus 11;
FIG. 15 is a block diagram showing the detailed software structure of the conventional data transmission/reception apparatus 11;
FIG. 16 is a block diagram illustrating data processing sections Pdc supporting both active data processing sections and passive data processing sections;
FIG. 17 is a diagram illustrating an internal structure of a transmission section 151 or a reception section 153;
FIG. 18 is a sequence chart illustrating an operation of the conventional data transmission/reception apparatus 11; and
FIG. 19 is a sequence chart illustrating an operation of the conventional data transmission/reception apparatus 11.

### DESCRIPTION OF THE PREFERRED EMBODIMENTS

### (first embodiment)

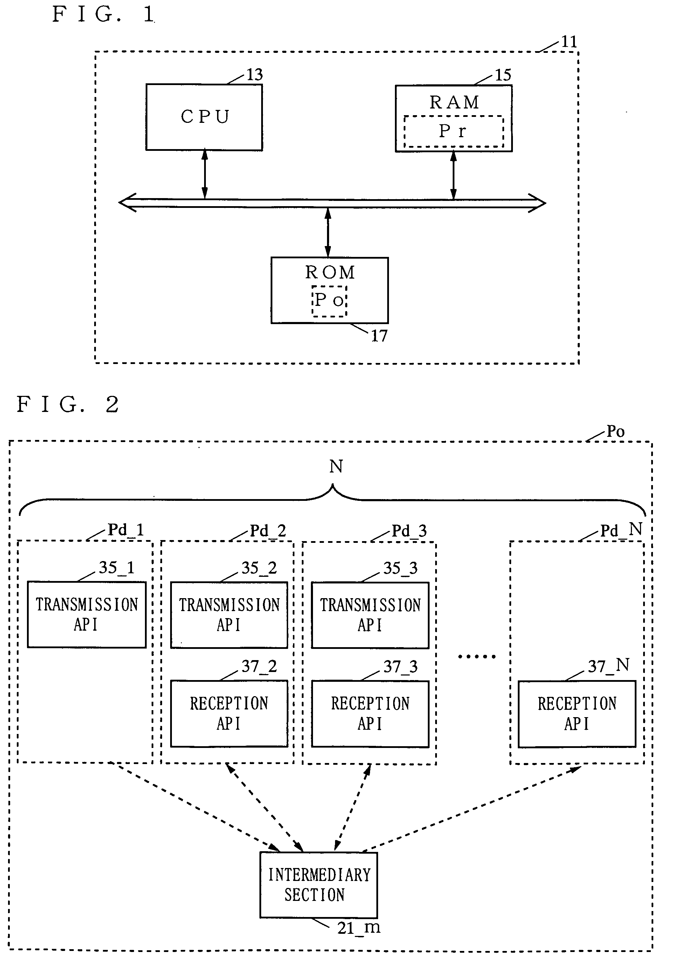

Referring to FIG. 1, a hardware structure of a data transmission/reception apparatus 11 according to the present invention, which realizes a multimedia data format conversion function by means of software, will be described. The data transmission/reception apparatus 11, which may be, for example, a cellular phone, a PDA (Personal Digital Assistant) , or a personal computer, handles multimedia data such as image data, moving picture data, or audio data. In the present embodiment, the data transmission/reception apparatus 11 comprises a CPU 13, a RAM 15, and a ROM 17. The ROM 17 stores a program which realizes various functions, including the multimedia data format conversion function. From the ROM 17, the CPU 13 reads a program for implementing the multimedia data conversion function. The program for implementing the multimedia data conversion function which has thus been read is loaded to the RAM 15 by the CPU 13, thus realizing a data transmission/reception apparatus by software means.

For conciseness, the program for implementing multimedia data conversion function as stored in the ROM 17 will hereinafter be referred to as the "implementing program Po", whereas the multimedia data conversion function as loaded to the RAM 15 will be referred to as the "loaded program Pr". For distinction between the first embodiment and a second embodiment to be described later, the loaded program Pr according to the first embodiment may be referred to as "the loaded program Pr1", and the loaded program Pr according to the second embodiment "the loaded program Pr2", as necessary.

FIG. 2 schematically shows the implementing program implementing program Po stored in the ROM 17. The implementing program Po includes a number N of data processing sections Pd_1 to Pd_N, which respectively correspond to the split, process-by-process components of a pipeline technique, and at least one intermediary section 21_m. Herein, N is an arbitrary natural number, and m is a natural number such that 1≦m≦(N-1). The N data processing sections Pd_1 to Pd_N may collectively be referred to as "data processing sections Pd". In other words, in the ROM 17, the N data processing sections Pd and at least the intermediary section 21_m are recorded. Also for distinction between the first embodiment and the second embodiment, the intermediary section (s) 21 according to the first embodiment may be referred to as the "intermediary section(s) 21a", and the intermediary section(s) 21 according to the second embodiment the "intermediary section (s) 21b", as necessary.

For conciseness, the present embodiment illustrates an example where the implementing program Po includes only one intermediary section 21 for mediating between data processing sections Pd.

Each data processing section Pd basically includes a transmission API 35 and a reception API 37, except that the data processing sections Pd_1 and Pd_N, which are located at either end of the path, only include a transmission API 35_1 and a reception API _N, respectively. In other words, the implementing program Po includes (N-1) transmission APIs 35_1 to 35_(N-1) and (N-1) reception APIs 37_2 to 37_N. Thus, the implementing program Po may be seen as containing (N-1) pairs of transmission APIs 35 and reception APIs 37. Note that each transmission API 35 and each reception API 37 correspond to each transmission API 135 and each reception API 137 in the above-described conventional data processing section Pdc, respectively.

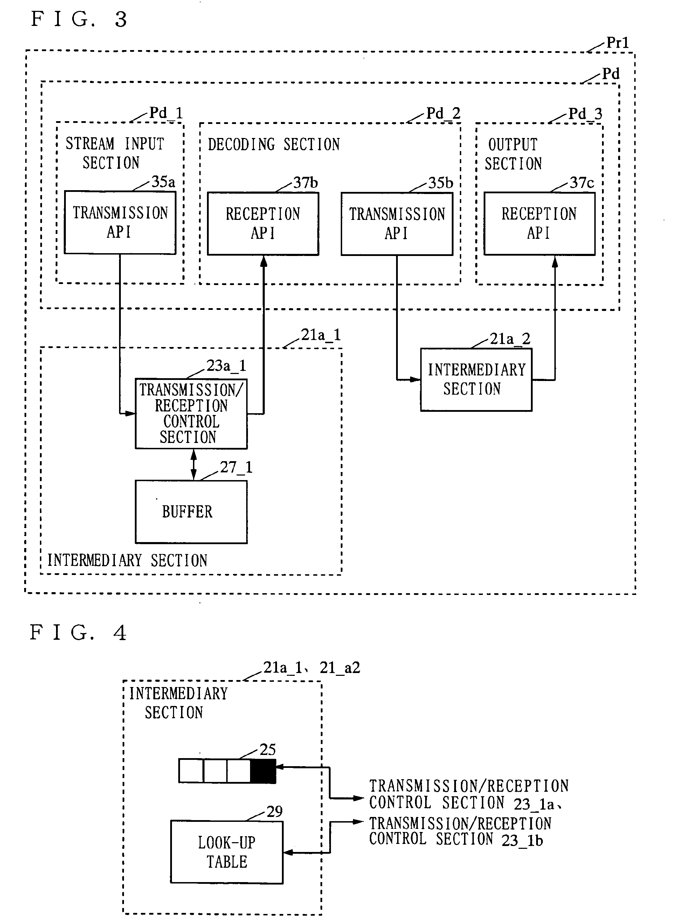

As will be later described with reference to FIG. 3, the intermediary section 21 includes a transmission/reception control section 23 and a buffer 27. The transmission/reception control section 23 integrally realizes the functions of the transmission control sections 129 of the transmission sections 151 and the reception control sections 131 of the reception sections 153 in the conventional data processing sections Pdc described earlier. The buffer 27 would also correspond to the buffers 127 in the conventional data processing sections Pdc.

In other words, as compared to each conventional data processing section Pdc, each data processing section Pd according to the present embodiment lacks the buffer 127, and also lacks the transmission control section 129 or the reception control section 131. The functions of the transmission control sections 129 and the reception control sections 131 thus omitted are integrated into the transmission/reception control section 23. Thus, although the implementing program Po according to the present embodiment includes (N-1) data processing sections Pd as does the conventional implementing program PGo, it will be appreciated that the size of the data processing sections Pd is reduced by the omission of the (N-1) transmission control sections 129 and reception control sections 131.

The functions of the transmission control sections 129 and the reception control sections 131 thus omitted are integrated into the transmission/reception control section 23 in the intermediary section 21. Thus, according to the present embodiment, the size of the transmission control sections 129 and the reception control sections 131 is reduced to about 1/(N-1). Meanwhile, only one buffer 27 is provided in the intermediary section 21. Therefore, the size of the buffer 127 is also reduced to 1/2(N-1) . Note that, among the omitted elements, the omission of the transmission control sections 129 and the reception control sections 131 contributes the most to the reduced size. As a result, the implementing program Po according to the present embodiment can be reduced to 1/(N-1) or less of the loaded program Pr1.

As mentioned above, the present embodiment conveniently illustrates an example where the implementing program Po includes only one intermediary section 21 for mediating between data processing sections Pd. However, the number of intermediary sections 21 mediating between data processing sections Pd is not limited to one. For example, in the case where a single data processing section Pd needs to handle two or more kinds of different data, e.g., audio data and image data, an intermediary section 21 will be required to support each process. In the above example, if each data processing section Pd is to support both audio data and image data, two intermediary sections 21 will be required. In this case, although the number of intermediary sections 21 when loaded to the RAM 15 will be greater than (N-1), there is still a considerable effect of reducing the size of the transmission/reception control section 23 and the buffer 27.

Referring to FIG. 3, the loaded program Pr1, which is a loaded form (on the RAM 15) of the implementing program Po stored in the ROM 17, will be described in detail. From the implementing program Po, the N data processing sections Pd_1 to Pd_N are loaded to the RAM 15. In addition, the intermediary section 21 is repetitively loaded so as to result in (N-1) instances on the RAM 15. For conciseness, the present example illustrates a case where the loaded program Pr1 only includes a first data processing section Pd_1, a second data processing section Pd_2, and a third data processing section Pd_3. In the present example, the first data processing section Pd_1 serves as a stream input section; the second data processing section Pd_2 serves as a decoding section; and the third data processing section Pd_3 serves as an output section.

The first data processing section Pd_1 and the third data processing section Pd_3, which are located at either end of the path, only include a transmission API 35a and a reception API 37c, respectively. The second data processing section Pdc_2 includes both a reception API 37b and a transmission API 35b. Thus, two transmission APIs 35a and 35b and two reception APIs 37b and 37c are contained. Therefore, the implementing program Po may practically be seen as containing two data processing sections Pd.

Moreover, two intermediary sections 21a_1 and 21a_2 are provided to mediate between the first data processing section Pd_1, the second data processing section Pd_2, and the third data processing section Pd_3. Specifically, the transmission/reception control section 23a_1 of the first intermediary section 21a_1 mediates between the transmission API 35a and the reception API 37b via a buffer 27_1. Similarly, although not explicitly shown in FIG. 3, the transmission/reception control section (23_2) of the second intermediary section 21a_2 mediates between the transmission API 35b and the reception API 37c via a buffer (27_2) . For distinction between the first embodiment and the second embodiment, the transmission/reception control section 23 according to the first embodiment may be referred to as the "transmission/reception control section 23a", and the transmission/reception control section 23 according to the second embodiment "the "transmission/reception control section 23b", as necessary.

In the loaded program Pr1, a data conversion process may be performed as follows. Upon obtaining an audio stream from a medium (not shown) , the first data processing section Pd_1 writes the audio stream to a designated address in the buffer 27_1 of the intermediary section 21a_1.

From the designated address in the buffer 27_1 of the intermediary section 21a_1, the second data processing section Pd_2 reads the audio stream, and decodes the read audio stream to generate actual audio data. The actual audio data which has been obtained through decoding is written to a designated address in the buffer 27_2 of the intermediary section 21a_2.

From the designated address in the buffer 27_2 of the intermediary section 21a_2, the third data processing section Pd_3 reads the actual audio data and reproduces it. In the present embodiment, it is assumed that all data processing sections Pd (i.e., the first data processing section Pd_1, the second data processing section Pd_2, and the third data processing section Pd_3) are active data processing sections, i.e., capable of activating a task on their own.

Since all of the data processing sections Pd_1 to Pd_3(Pd_N) are active data processing sections in the present embodiment, data transmission/reception is performed asynchronously. In this case, as shown in FIG. 4, a data queue 25 and a look-up table 29 are further provided in each of the intermediary sections 21a_1 and 21a_2. In the look-up table 29, buffer information concerning the data queue 25 is recorded. The data queue 25 and the look-up table 29 are recorded in the buffer 27. It will be appreciated that, in the loaded program Pr1, the data queue 25 and the look-up table 29 are previously provided as part of the intermediary section 21.

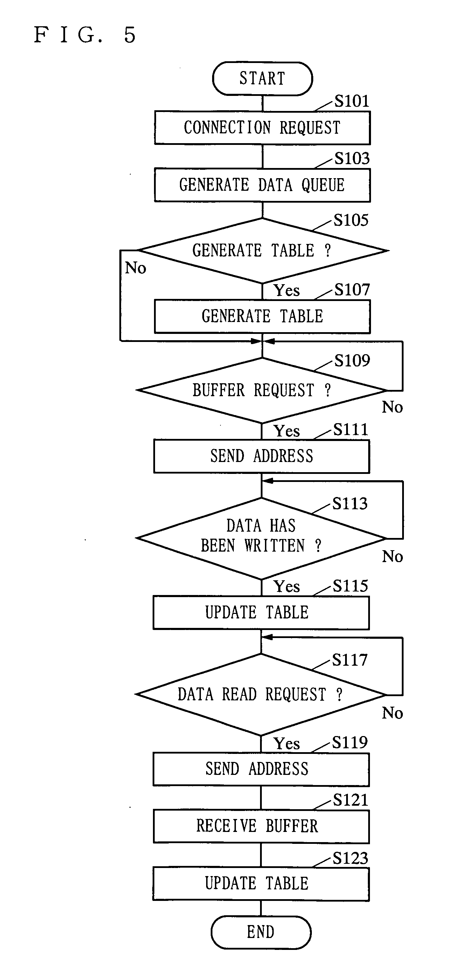

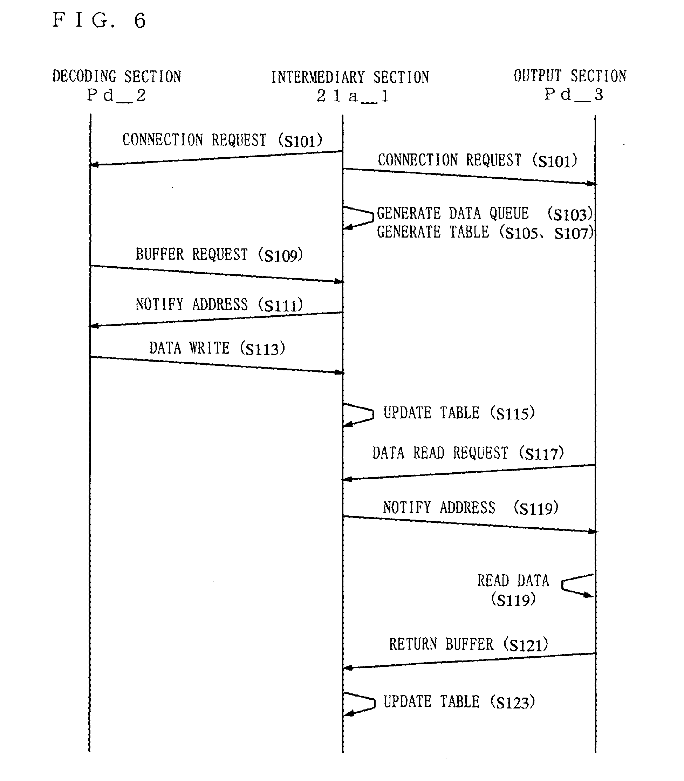

Referring to a flowchart shown in FIG. 5 and a sequence chart shown in FIG. 6, a data conversion operation performed by the data transmission/reception apparatus 11 (loaded program Pr1) having the above-described structure will be described. For conciseness of description, only the data transmission/reception between the second data processing section Pd_2 (decoding section) and the third data processing section Pd_3 (output section) will be described.

At step S101, a connection request is sent from the intermediary section 21a_2 to the second data processing section Pd_2 and the third data processing section Pd_3. Specifically, in order to connect the second data processing section Pd_2 and the third data processing section Pd_3 to each other, the transmission/reception control section 23a_2 in the intermediary section 21a_2 sends a connection request to the transmission API 35b of the second data processing section Pd_2 and the reception API 37c of the third data processing section Pd_3. Then, control proceeds to the next step S103.

At step S103, the data queue 25 is generated. Then, control proceeds to the next step S105.

At step S105 , it is determined whether or not to generate the look-up table 29. Specifically, the transmission/reception control section 23a_2 determines whether the look-up table 29 has already been generated or not.

If step S105 determines "No", i.e., the look-up table 29 has not been generated yet, control proceeds to step S107. At step S107, the transmission/reception control section 23a_2 generates the look-up table 29. Then, control proceeds to the next step S109.

On the other hand, if step S105 determines "Yes", i.e. , the look-up table 29 has already been generated, control proceeds to step S109.

At step S109, it is determined whether a request for the buffer 27 has been received. Upon decoding the data, the second data processing section Pd_2 sends a vacant buffer request to the intermediary section 21a_2 by means of the transmission API 35b. The transmission/reception control section 23a_2 repeatedly performs the process of step S109 until receiving a vacant buffer request from the second data processing section Pd_2. If step S109 determines "Yes", i.e., a vacant buffer request has been received from the second data processing section Pd_2, control proceeds to the next step S111.

At step S111, the intermediary section 21a_2 notifies an address of a vacant buffer. Specifically, upon receiving a vacant buffer request from the transmission API 35b, the transmission/reception control section 23a_2 checks the look-up table 29 which is recorded in the buffer 27. If a vacant buffer is found on the look-up table 29, the intermediary section 21a_2 sends the address of the vacant buffer to the second data processing section Pd_2. Then, control proceeds to the next step S113.

At step S113, it is determined whether data has been written. Specifically, the transmission/reception control section 23a_2 determines whether a read completed notification has been received from the second data processing section Pd_2. If an address of a vacant buffer is designated by the intermediary section 21a_2, the second data processing section Pd_2 writes the data to be transmitted (audio data) to the designated address in the designated buffer 27_1. Upon completing the data write, the second data processing section Pd_2 sends a write completed notification to the intermediary section 21a_2. If step S113 determines "No", i.e., data has not been written to the buffer 27_2, the process of step S113 is repeated until such a data write is performed.

On the other hand, if step S113 determines "Yes", i.e. , the data write by the second data processing section Pd_2 has been completed, control proceeds to the next step S115.

At step S115, the look-up table 29 is updated. Specifically, since data has been written to a vacant buffer by the second data processing section Pd_2, the transmission/reception control section 23a_2 updates the look-up table 29 so that the vacant buffer now appears as a recorded buffer. Then, control proceeds to the next step S117.

At step S117 , it is determined whether a data read request has been received from the third data processing section Pd_3. When the third data processing section Pd_3 is to receive data, the third data processing section Pd_3 sends a data read request to the intermediary section 21a_2 via the reception API 37c. Then, control proceeds to the next step S119.

At step S119, an address is notified to the third data processing section Pd_3 . Specifically, upon receiving a data read request from the third data processing section Pd_3, the transmission/reception control section 23a_2 checks the look-up table 29 to determine a buffer 27_2 which is to output data next, i.e., a buffer storing data having the oldest time stamp in all the data in the data queue 25201. Upon selecting such a buffer 27_2, the transmission/reception control section 23a_2 passes the address of the selected buffer 27_2 to the reception API 37c of the third data processing section Pd_3. From the address received from the intermediary section 21a_1, the third data processing section Pd_3 reads the data to be received, and outputs the data. After the data read is completed, the third data processing section Pd_3 returns the buffer 27_2 to the intermediary section 21a_2. Then, control proceeds to the next step S121.

At step S121, the transmission/reception control section 23a_2 receives the buffer 27_2 returned from the third data processing section Pd_3. Then, control proceeds to the next step S123.

At step S123, the look-up table 29 is updated. Upon receiving the buffer 27 returned from the third data processing section Pd_3, the transmission/reception control section 23a_2 updates the look-up table 29. Specifically, the transmission/reception control section 23a_2 updates the look-up table 29 so that the returned buffer 27_2 now appears as a vacant buffer.

Note that, in the data transmission/reception operation, processes for realizing various functions are all implemented by the intermediary section 21a_1. The same also applies to the data transmission/reception between the first data processing section Pd_1 and the second data processing section Pd_2.

As described above, according to the present embodiment, regardless of the number of data processing sections Pd provided in the data transmission/reception apparatus 11, only one program for realizing an intermediary section needs to be recorded in the ROM. Each data processing section Pd only needs to include a transmission API 35 or a reception API 37 for calling a relevant function to enable data transmission/reception. As compared to the N data processing sections being comprised in the conventional data transmission/reception apparatus, the apparatus according to the present embodiment comprises (N-1) pairs of transmission/reception control sections, buffers, and transmission or reception APIs. Note that, in some cases, it suffices if only either one of a pair of transmission and reception sections includes a buffer. Therefore, in accordance with the data transmission/reception apparatus 11 of the present invention, the number of transmission/reception control sections 23 is reduced to 1/(N-1), whereas the number of buffers is reduced to at least a half.

Moreover, the program size necessary for the transmission/reception API included in each data processing section Pd is very small as compared to that required for the transmission/reception control sections 23 and buffers 27. Thus, by reducing redundancy as compared to the conventional technique, the required ROM size can be reduced. Thus, the present invention is also applicable to mobile devices whose ROM size is limited. Furthermore, the implementation cost can be reduced in the case where the function of each data processing section is to be implemented by hardware means.

Since the intermediary section 21 is used as a common processing component, each data processing section Pd only needs to include a transmission API 35 or a reception API 37 for calling a function to utilize the functionalities of the intermediary section 21, e.g., requesting a buffer 27. As a result, the number of steps necessary for the development of the data processing sections Pd can be reduced.

Furthermore, the use of a common intermediary section 21 to realize a transmission/reception function provides an advantage in that, in the case where a new component is to be added, a connection test for verifying proper operation only needs to be performed with respect to only one data processing section Pd among the existing data processing sections Pd. As a result, the number of required test steps can be reduced.

### (second embodiment)

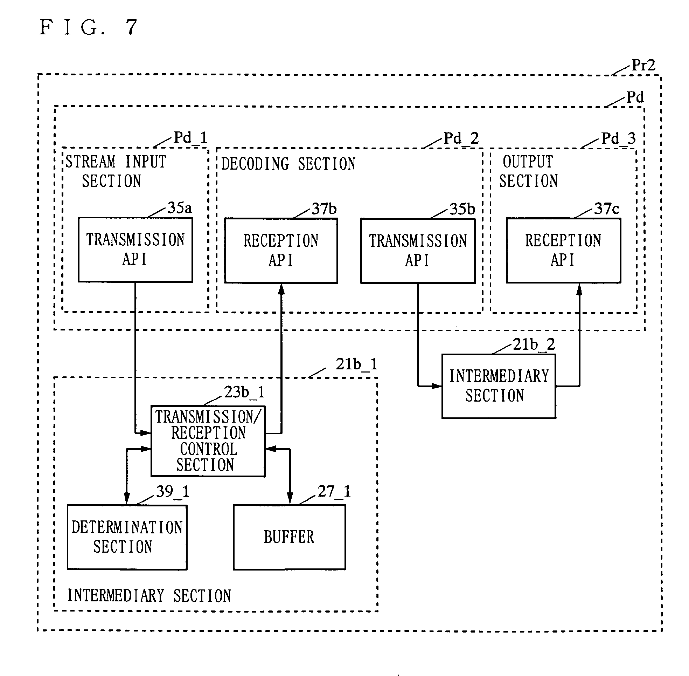

Referring to the block diagram of FIG. 7, a data transmission/reception apparatus 11 according to a second embodiment of the present invention will be described. FIG. 7 shows the details of a loaded program Pr2 on a RAM 15, similarly to FIG. 3. The loaded program Pr2 is identical to the loaded program Pr1 shown in FIG. 3 except that the intermediary section 21a is replaced by an intermediary section 21b. The intermediary section 21b is identical to the intermediary section 21a shown in FIG. 3 except that the transmission/reception control section 23a is replaced by a transmission/reception control section 23b and that a determination section 39 is additionally included.

In the present embodiment, the second data processing section Pd_2 and third data processing section Pd_3 are active data processing sections, i.e. , capable of activating a task on their own. On the other hand, the first data processing section Pd_1 is a passive data processing section which operates in synchronization with tasks processed by the second data processing section Pd_2.

The determination section 39_1 determines whether the two data processing sections Pd connected to the intermediary section 21b (i.e. , the first and second data processing sections Pd_1 and Pd_2, or the second and third data processing sections Pd_2 and Pd_3 in this example) are both active data processing sections or one of them is a passive data processing section. If both of the two connected data processing sections Pd are active data processing sections (as exemplified by the data transmission between the second and third data processing sections Pd_2 and Pd_3), a data queue 25 is generated in the buffer 27_2 of the intermediary section 21b_2 . On the other hand, if the two connected data processing sections are an active data processing section and a passive data processing section (as exemplified by the data transmission between the first and second data processing sections Pd_1 and Pd_2 ), no data queue 25 is generated in the buffer 27_1 of the intermediary section 21b_1.

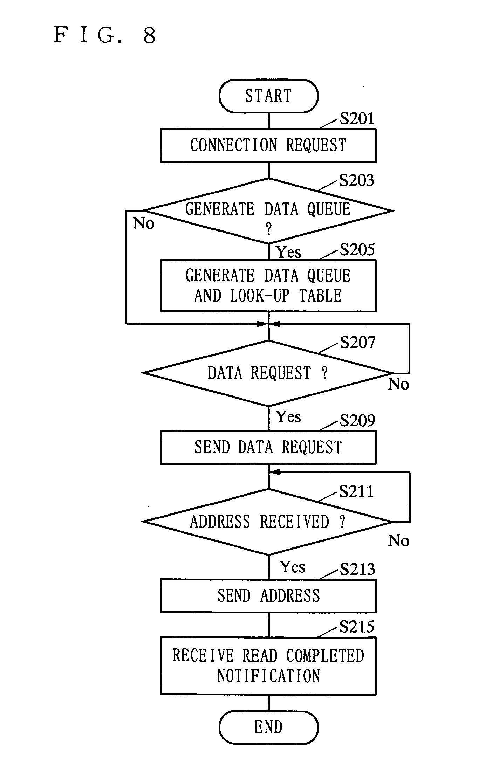

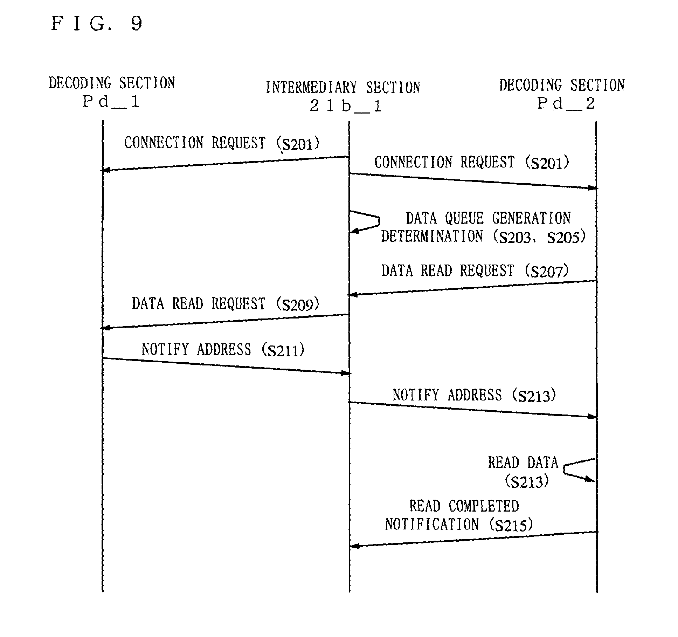

Referring to a flowchart shown in FIG. 8 and a sequence chart shown in FIG. 9, an operation in which data is transmitted from the first data processing section Pd_1 (stream input section) to the second data processing section Pd_2 (decoding section) will be described.

First, at step S201, a connection request is transmitted from the intermediary section 21b_1 to the first data processing section Pd_1 and the second data processing section Pd_2. Specifically, in order to connect the first data processing section Pd_1 and the second data processing section Pd_2 to each other, the transmission/reception control section 23b_1 of the intermediary section 21b_1 sends a connection request to a transmission API 35b of the first data processing section Pd_1 and a reception API 37b of the second data processing section Pd_2 . Then, control proceeds to the next step S203.

At step S203, it is determined whether or not to generate the data queue 25. Specifically, the determination section 39_1 in the intermediary section 21b_1 determines whether each of the first data processing section Pd_1 and the second data processing section Pd_2 is an active data processing section or a passive data processing section. In the present embodiment, the second data processing section Pd_2 will be determined as an active data processing section, whereas the first data processing section Pd_1 will be determined as a passive data processing section. Therefore, in the present embodiment, step S203 will determine "No", i.e., no data queue 25 is to be generated. The determination section 39_1 passes the result of the determination to the transmission/reception control section 23b_1. Then, control proceeds to the next step S207.

On the other hand, if step S203 determines "Yes", i.e. , a data queue 25 is to be generated, control proceeds to step S205. At step S205, upon receiving the determination result from the determination section 39_1, the transmission/reception control section 23b_1 generates a data queue 25. Moreover, a look-up table is generated if no look-up table 29 has been generated at step S203. Then, control proceeds to the next step S207.

At step S207, it is determined whether a data request has been received. Specifically, the transmission/reception control section 23b_1 determines whether a request to read data has been sent from the second data processing section Pd_2. If step S207 determines "No", i.e. , no data request has been received from the second data processing section Pd_2, the process of step S207 is repeated until a data request is received.

On the other hand, if step S207 determines "Yes", i.e. , a data request has been received from the second data processing section Pd_2, control proceeds to step S209. At step S209, the data request is sent from the intermediary section 21b_1 to the first data processing section Pd_1. Then, control proceeds to the next step S211.

At step S211, it is determined whether an address has been received. The transmission/reception control section 23b_1 determines whether a position (address) at which data is recorded has been sent from the first data processing section Pd_1. If step S211 determines "No", i.e. , no address has been received from the first data processing section Pd_1, the process of step S211 is repeated until an address is received.

On the other hand, if step S211 determines "Yes", i.e. , an address has been received from the first data processing section Pd_1, control proceeds to the next step S213. At step S213, the transmission/reception control section 23b_1 sends the address received from the first data processing section Pd_1 to the second data processing section Pd_2. Then, control proceeds to the next step S215 . Upon receiving an address from the intermediary section 21b_1, the second data processing section Pd_2 reads data from the received address. When the data read has been completed, the second data processing section Pd_2 sends a read completed notification to the intermediary section 21b_1.

At step S215, the read completed notification is received. Upon receiving the read completed notification from the second data processing section Pd_2, the transmission/reception control section 23b_1 in the intermediary section 21b_1 ends the process.

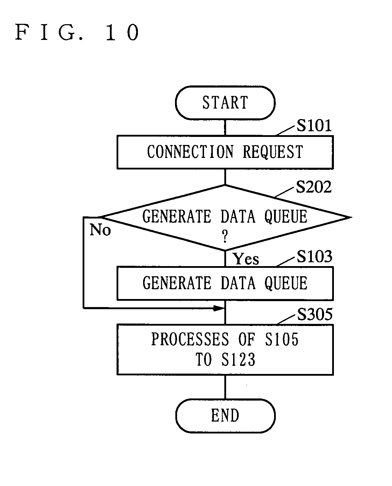

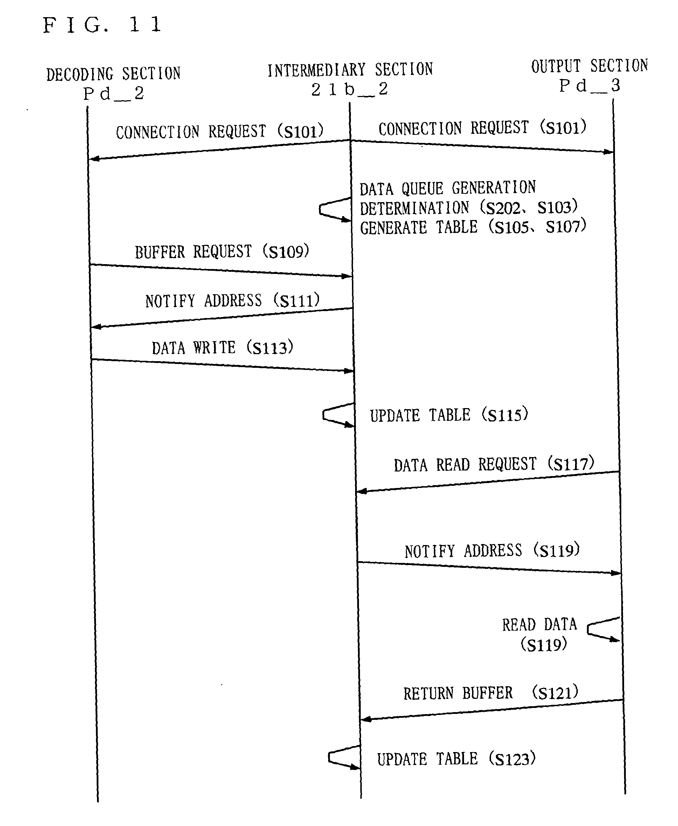

Next, referring to a flowchart shown in FIG. 10 and a sequence chart shown in FIG. 11, an operation in which data is transmitted from the second data processing section Pd_2 to the third data processing section Pd_3 will be described. The flowchart of FIG. 10 is identical to the flowchart of FIG. 5 (which shows an operation of the data transmission/reception apparatus 11 according to the first embodiment), except that step S101 is followed by additional step S202. Therefore, the descriptions of any steps which are identical to their counterparts in the flowcharts of FIGS. 5 and 8 will be omitted.

At step S202, it is determined whether or not to generate a data queue 25. In the present embodiment, the second data processing section Pd_2 and the third data processing section Pd_3 will be determined by the determination section 39_2 both as active data processing sections. Therefore, a data queue 25 and a look-up table 29 are to be generated. Then, control proceeds to the next step S103. The processes of steps S103 to S123 are similar to the processes of steps S103 to S123 in the flowchart of FIG. 5.

As described above, according to the second embodiment, data transmission/reception can be mediated by the intermediary section 21 even in the case where active data processing sections and passive data processing sections are present in the apparatus.

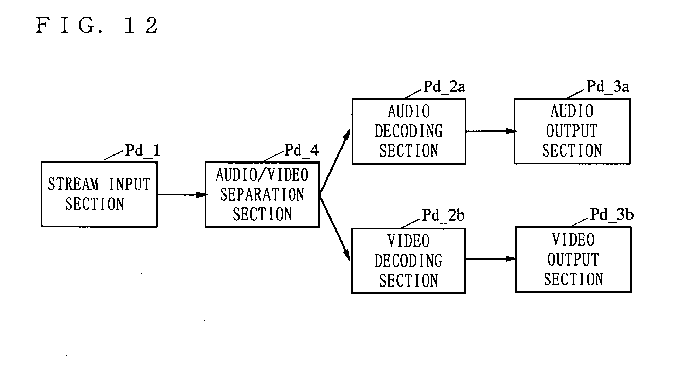

Although the present embodiment illustrates audio data reproduction, the processed data is not limited to audio data so long as the data is processed by a plurality of data processing sections by a pipeline technique. For example, the present embodiment would also be applicable to the reproduction of a multiplexed stream of audio data and video data in a structure shown in FIG. 12.

While the invention has been described in detail, the foregoing description is in all aspects illustrative and not restrictive. It is understood that numerous other modifications and variations can be devised without departing from the scope of the invention.

## Claims

1. A data transmission/reception apparatus (11, Pr) for performing a data transfer by a pipeline technique between a first predetermined number (N) of processing means (Pd_1 to Pd_N) each capable of performing a data process, the first predetermined number being two or more, comprising:
a second predetermined number (N-1) of intermediary means (21) for interconnecting first data processing means (Pd_1) and second data processing means (Pd_2) and allowing data obtained through the data process performed by the first data processing means (Pd_1) to be transmitted to the second data processing section, wherein the first data processing means (Pd_1) and second data processing means (Pd_2) are adjoining data processing means, the second predetermined number being smaller by one than the first predetermined number,
wherein,
the first data processing means (Pd_1) includes transmission means (35) for providing connection to the intermediary means (21) to transmit the data to the second data processing means (Pd_2),
the second data processing means (Pd_2) includes reception means (37) for providing connection to the intermediary means (21) to receive the data transmitted from the first data processing means (Pd_1), and
the intermediary means (21) includes:
transmission/reception control means (23) for controlling the data transmission/reception; and
a buffer (27) for temporarily storing the data.

2. The data transmission/reception apparatus (11, Pr) according to claim 1, wherein,
the transmission means (35) includes writing means for acquiring an address in the buffer (27) at which no data is retained and performing a data write at the address, and
the reception means (37) includes reading means for acquiring an address in the buffer (27) at which some data is retained and reading the data at the address.

3. The data transmission/reception apparatus (11, Pr) according to claim 1, wherein,
the first predetermined number (N) of data processing means (Pd) comprise at least one data processing means selected from the group consisting of active processing means (135) and passive processing means(137), wherein the active processing means (135) is capable of operating independently of another and the passive processing means (137) operates in synchronization with another,
the intermediary means (21) includes data queue generation determination means for determining whether or not to generate a data queue (25) by detecting whether each of the first data processing means (Pd_1) and the second data processing means (Pd_2) is an active processing means (135) or passive processing means (137), and
when the data queue (25) is not to be generated, the intermediary means (21) allows the second data processing means (Pd_2) to receive data as soon as a data transmission request from the first data processing means (Pd_1) is received.

4. The data transmission/reception apparatus (11, Pr) according to claim 3, wherein the data queue (25) is not to be generated if the first data processing means (Pd_1) and the second data processing means (Pd_2) operate in a same task or thread.

5. The data transmission/reception apparatus (11, Pr) according to claim 3 or 4, wherein the data transmission request and the data reception request are the same irrespective of whether the data queue (25) is to be generated or not.

6. The data transmission/reception apparatus (11, Pr) according to any of claims 1 to 5, wherein,
the second predetermined number (N-1) is equal to or greater than two, and
the second predetermined number of intermediary means (Pd_1 to Pd_N) perform an identical function.

7. A data transmission/reception method for realizing a data transmission in the data transmission/reception apparatus (11, Pr) according to claim 1, comprising:
a first connection step of connecting the first data processing means (Pd_1) to the intermediary means (21);
a second connection step of connecting the second data processing means (Pd_2) to the intermediary means (21);
an unrecorded address acquisition step of acquiring a first address in the buffer (27) at which no data is retained;
a transmissions step of writing the data from the first data processing section at the first address;
a recorded address acquisition step of acquiring a second address in the buffer (27) at which some data is retained; and
a reception step of reading the data retained at the second address.

8. The data transmission/reception method according to claim 7 for realizing a data transmission in the data transmission/reception apparatus (11, Pr) according to claim 3, further comprising:
an active/passive determination step of determining whether each of the first data processing means (Pd_1) and the second data processing means (Pd_2) is an active processing means (135) or passive processing means (137);
a data queue generation determination step of determining whether or not to generate a data queue (25) based on a result of the determination by the active/passive determination step; and
a first transmission/reception control step of, when the data queue (25) is not to be generated, allowing the second data processing means (Pd_2) to receive data as soon as a data transmission request from the first data processing means (Pd_1) is received.

9. The data transmission/reception method (11, Pr) according to claim 8, further comprising a second transmission/reception control step of, when the data queue (25) is not to be generated, allowing the second data processing means (Pd_2) to receive data as soon as a data transmission request from the first data processing means (Pd_1) is received.

10. The data transmission/reception method (11, Pr) according to claim 8, wherein the data queue (25) is not to be generated if the first data processing means (Pd_1) and the second data processing means (Pd_2) operate in a same task or thread.

11. A recording medium having recorded thereon a computer program for executing the data transmission/reception method according to any of claims 7, 8, 9, and 10.
